# EUROPÄISCHE PATENTANMELDUNG

(11) **EP 4 792 699 A1**
(43) Veröffentlichungstag der Anmeldung: **19.08.2026**
(21) Anmeldenummer: 25157589.0
(22) Anmeldetag: 13.02.2025
(51) Int. Cl.: A47J 43/046, A47J 43/07

(54) **BASISTEIL FÜR EINE KÜCHENMASCHINE UND ZUGEHÖRIGE KÜCHENMASCHINE**

(71) Anmelder: Vorwerk & Co. Interholding GmbH, 42275 Wuppertal (DE)
(72) Erfinder: LANG, Torsten, 42657 Solingen (DE)
(74) Vertreter: Gille Hrabal Partnerschaftsgesellschaft mbB Patentanwälte

(57) **Zusammenfassung**

Die Erfindung betrifft ein Basisteil für eine Küchenmaschine und eine Küchenmaschine. Ein Basisteil (3) für eine Küchenmaschine (1) umfasst eine Anordnung (9) zum Verbinden mit einem Speisenzubereitungsgefäß (5), wobei die Anordnung (9) ein drehbares Betätigungsteil (10) zum Ausführen einer Funktion aufweist, wobei das Basisteil (3) ferner einen Positionssensor (20) umfasst, um eine Drehposition des Betätigungsteils (10) zu detektieren. Auf diese Weise kann die Drehposition des Betätigungsteils besonders vorteilhaft ermittelt werden.

## Beschreibung

Die Erfindung betrifft ein Basisteil für eine Küchenmaschine und eine Küchenmaschine.

Die Position eines Drehmechanismus kann durch Analyse der Stromaufnahme eines Motors ermittelt werden. Dabei wird der aufgenommene Strom des Motors, der die Drehung ausführt, zur Erkennung einer Winkelposition oder Winkeländerung genutzt. Eine derartige Positionsbestimmung ist allerdings einerseits ungenau und andererseits fehleranfällig, da z. B. bei einer mechanischen Blockade im System auch - fehlerhaft - das Erreichen der Zielposition angenommen werden kann.

Darüber hinaus sind Motoren mit Inkrementalgebern und hochgenaue Stellmotoren bekannt, die selbst die Drehposition (Winkelposition) mit großer Genauigkeit ausgeben, ohne dass es eines zusätzlichen Sensors bedarf. Befinden sich zwischen dem Stellmotor und dem anzutreibenden Ziel ein oder mehrere bewegliche Teile, beispielsweise ein Getriebe, ist aufgrund des vorhandenen Spiels eine genaue Detektion auch hier nicht mehr möglich.

Druckschrift EP 2 992 794 B1 offenbart ein Küchengerät mit einem Deckel, der von oben mit einem drehbaren Verriegelungsteil verriegelt wird. Das Küchengerät umfasst eine Erfassungseinrichtung zum Erfassen des Weges, den der Verriegelungsantrieb, das Verriegelungsteil selbst oder/und ein den Verriegelungsantrieb mit dem Verriegelungsteil verbindendes Verbindungsteil zurücklegt. Auch Druckschrift EP 3 078 311 B1 offenbart eine Küchenmaschine mit einem Rührgefäß und einem durch Andrücken von oben verriegelbarem Deckel für das Rührgefäß.

Die Aufgabe der Erfindung besteht darin, ein weiterentwickeltes Basisteil und eine weiterentwickelte Küchenmaschine zur Verfügung zu stellen.

Die Aufgabe wird gelöst durch das Basisteil gemäß Anspruch 1 und die Küchenmaschine gemäß dem nebengeordneten Anspruch. Vorteilhafte Ausgestaltungen sind in den Unteransprüchen angegeben.

Zur Lösung der Aufgabe dient ein Basisteil für eine Küchenmaschine. Das Basisteil umfasst eine Anordnung zum Verbinden mit einem Speisenzubereitungsgefäß. Insbesondere umfasst die Anordnung ein drehbares Betätigungsteil zum Ausführen einer Funktion. Insbesondere umfasst das Basisteil ferner einen Positionssensor, beispielsweise um eine Drehposition des Betätigungsteils zu detektieren.

Durch den Positionssensor kann die Drehposition des Betätigungsteils besonders vorteilhaft ermittelt werden. Die Drehposition kann beispielsweise zum Steuern von Funktionen der Küchenmaschine genutzt werden, insbesondere für eine Speisenzubereitung in einem Speisenzubereitungsgefäß. Das Betätigungsteil kann auf unterschiedlichste Arten verwendet werden, etwa für die Verriegelung und Freigabe des Speisenzubereitungsgefäßes oder eines Funktionsmoduls oder für die Ansteuerung von Funktionskomponenten. Es wird ein besonders verlässliches Basisteil bereitgestellt, das ein Erreichen einer bestimmten Zielposition nur dann detektiert, wenn die Zielposition auch tatsächlich erreicht worden ist. Es können gezielt Positionen angefahren werden, um bestimmte Funktionen zu steuern. Dies ermöglicht neue Anwendungen, wie das Betätigen von Schaltern oder das Öffnen bzw. Schließen von Ventilen. Zudem kann ein Antrieb des Betätigungselements durch die stets bekannte Position sanft erfolgen.

Eine Küchenmaschine kann ein Basisteil und ein damit verbindbares Speisenzubereitungsgefäß umfassen. Typischerweise hält bzw. trägt das Basisteil das Speisenzubereitungsgefäß und dient der Steuerung. Das Basisteil ist typischerweise dazu geeignet, auf einer Oberfläche aufgestellt zu werden. Das Basisteil weist insbesondere eine Ausgabeeinrichtung und/oder eine Eingabeeinrichtung auf. Das Basisteil umfasst typischerweise einen Motor zum Antreiben eines drehbaren Werkzeugs im Speisenzubereitungsgefäß oder einer Werkzeugaufnahme, mit der ein drehbares Werkzeug verbunden werden kann. Das Speisenzubereitungsgefäß kann eine Verbindungswelle umfassen, mit der das Werkzeug verbunden werden kann . Das Basisteil kann im verbundenen Zustand dem Speisenzubereitungsgefäß elektrische Energie bereitstellen, ein Werkzeug des Speisenzubereitungsgefäßes drehen und/oder Daten an das Speisenzubereitungsgefäß und/oder von dem Speisenzubereitungsgefäß übertragen. Die Anordnung ist typischerweise dazu eingerichtet, unterschiedliche Speisenzubereitungsgefäße an das Basisteil zu koppeln.

Ein Speisenzubereitungsgefäß ist ein Gefäß, in das eine Speise zwecks Durchführung eines Zubereitungsschrittes eingebracht werden kann. Eine Speise im Sinne der Erfindung umfasst auch eine einzelne Zutat. Ein Zubereitungsschritt kann z. B. Erhitzen, Rühren, Zerkleinern und/oder Ruhenlassen umfassen. Ein Speisenzubereitungsgefäß kann beispielsweise ein Topf, eine Rührschüssel, eine Pfanne, ein Zerkleinerungsgerät, eine Popcornmaschine, ein Frittiergefäß, ein Dampfgarer, etc. sein. Ein Speisenzubereitungsgefäß kann einteilig oder mehrteilig sein. Ein Speisenzubereitungsgefäß kann eine oder mehrere Funktionskomponenten umfassen. Eine Funktionskomponente kann beispielsweise ein drehbares Werkzeug zur Speisenzubereitung wie z. B. ein Rührwerk, ein Knetwerkzeug, ein Mixmesser oder eine Schneid- und/oder Reibscheibe sein. Alternativ oder ergänzend kann ein Speisenzubereitungsgefäß als Funktionskomponente eine Heizeinrichtung umfassen. Es können eine, zwei oder mehr Heizeinrichtungen vorhanden sein, die gemeinsam und/oder individuell angesteuert werden können. Es kann z. B. eine Dickschichtheizung, eine Röhrenheizung und/oder eine flächige Heizung vorhanden sein. Es können sich eine oder mehrere Funktionskomponenten mittelbar oder unmittelbar auf dem Speisenzubereitungsgefäß, zumindest teilweise im Speisenzubereitungsgefäß, bevorzugt vollständig im Speisenzubereitungsgefäß oder am Speisenzubereitungsgefäß befinden. Zur Ansteuerung einer Funktionskomponente können eine oder mehrere weitere Elemente verwendet werden, die mit dem Speisenzubereitungsgefäß zusammenarbeiten, z. B. eine unten beschriebene Übertragungseinrichtung. Ein Speisenzubereitungsgefäß kann zudem einen oder mehrere Sensoren umfassen, beispielsweise einen Temperatursensor, einen Drucksensor und/oder einen Sensor zum Erkennen der Art eines Funktionsmoduls. Ein Speisenzubereitungsgefäß kann zudem eine kabelgebundene oder kabellose Schnittstelle zum Senden und/oder Empfangen von Daten aufweisen.

Die Anordnung zum Verbinden mit einem Speisenzubereitungsgefäß dient insbesondere dem mechanischen Verbinden des Basisteils mit einem Speisenzubereitungsgefäß. Die Anordnung kann auch als Schnittstelle zum mechanischen Verbinden des Speisenzubereitungsgefäßes bezeichnet werden. Das Verbinden meint bevorzugt ein Positionieren des Speisenzubereitungsgefäßes derart in oder auf der Anordnung, dass das Speisenzubereitungsgefäß mit dem Basisteil für eine Speisenzubereitung betrieben werden kann. Typischerweise befindet sich zumindest ein Großteil des Speisenzubereitungsgefäßes dann oberhalb zumindest eines Großteils des Basisteils. Das Speisenzubereitungsgefäß wird also auf das Basisteil aufgesetzt. Bevorzugt ist die Anordnung so eingerichtet, dass zumindest eine seitliche Bewegung des Speisenzubereitungsgefäßes relativ zum Basisteil insbesondere formschlüssig blockiert ist. So kann ein Abrutschen des Speisenzubereitungsgefäßes verhindert werden. Ein Entfernen des Speisenzubereitungsgefäßes von der Anordnung und damit vom Basisteil mit einer nach oben gerichteten Bewegung des Speisenzubereitungsgefäßes ist typischerweise möglich, sofern das Speisenzubereitungsgefäß nicht mit dem Basisteil verriegelt ist.

Die Anordnung kann grundsätzlich beliebig geformt sein, beispielsweise als ebene Fläche. Die Anordnung kann vorteilhaft als Aufnahme zum Einsetzen des Speisezubereitungsgefäßes ausgestaltet sein. Das Speisenzubereitungsgefäß kann in die Aufnahme eingesetzt werden, um dort betrieben zu werden. Die Aufnahme kann als Vertiefung ausgestaltet sein oder eine oder mehrere Vertiefungen aufweisen, in die das Speisenzubereitungsgefäß oder einzelne Komponenten des Speisenzubereitungsgefäßes eingesetzt werden können. In diesem Fall wird beim Einsetzen zumindest ein Abschnitt des Speisenzubereitungsgefäßes unter zumindest einen Abschnitt des Basisteils bewegt.

Die Anordnung dient insbesondere auch dem Ansteuern des Speisenzubereitungsgefäßes bzw. von Funktionskomponenten des Speisenzubereitungsgefäßes für eine Speisenzubereitung. Dazu kann die Anordnung unterschiedliche Bereiche aufweisen, die unterschiedliche Funktionen eines Speisenzubereitungsgefäßes ansteuern und ggf. eines Funktionsmoduls können. Ein Bereich der Anordnung ist das Betätigungsteil.

Das Betätigungsteil dient dem Ausführen einer Funktion, insbesondere einer Funktion beim Speisenzubereitungsgefäß. Eine Funktion kann in einem Durchführen, Betätigen, Ansteuern oder Auslösen einer Funktion, beispielsweise einer Funktionskomponente eines Speisenzubereitungsgefäßes oder eines damit verbundenen Funktionsmoduls bestehen. Eine mögliche Funktion beim Speisenzubereitungsgefäß kann beispielsweise das insbesondere formschlüssige Verriegeln des Speisenzubereitungsgefäßes mit dem Basisteil sein. Das Speisenzubereitungsgefäß kann im verriegelten Zustand nicht von dem Basisteil entfernt werden. Eine andere mögliche Funktion kann darin bestehen, eine Funktion des Speisenzubereitungsgefäßes auszulösen wie z. B. ein Ventil am Speisenzubereitungsgefäß zu öffnen oder zu schließen. Eine weitere mögliche Funktion kann darin bestehen, ein bewegliches Teil des Speisenzubereitungsgefäßes wie z. B. eine Übertragungseinrichtung zu bewegen. Die Übertragungseinrichtung kann ihrerseits eine Funktion ausführen, beispielsweise ein Funktionsmodul auf dem Speisenzubereitungsgefäß verriegeln oder eine Funktion des Funktionsmoduls steuern, etwa am Funktionsmodul ein Ventil öffnen oder schließen oder einen Schalter oder Knopf betätigen. Eine Funktion kann auch darin bestehen, ein Sperrelement zu bewegen, um eine Bewegung eines anderen Teils freizugeben oder zu sperren. Zumindest eine Komponente zur Ausführung der Funktion kann sich im, auf, unter und/oder am Speisenzubereitungsgefäß befinden.

Grundsätzlich kann eine Funktion auch darin bestehen, ein Zubehörteil wie z. B. ein drehbares Werkzeug im Speisenzubereitungsgefäß zu drehen, beispielsweise in eine oszillierende Bewegung zu versetzen oder durch oszillierende Bewegungen in eine schrittweise Drehung in eine Drehrichtung zu versetzen. Dies kann unabhängig von einer angetriebenen Welle des Basisteils zum Antreiben eines drehbaren Werkzeugs erfolgen.

Der Positionssensor dient dazu, eine Drehposition des Betätigungsteils zu detektieren. Insbesondere ist der Positionssensor dazu eingerichtet, zumindest die aktuelle Drehposition zu ermitteln. Bevorzugt ist der Positionssensor dazu eingerichtet, jede beliebige Drehposition des Betätigungsteils zu ermitteln. Das bedeutet, dass nicht nur punktuelle Positionen ermittelt werden können, wie dies beispielsweise bei Endanschlägen der Fall ist. Die Bewegung des Betätigungsteils kann umlaufend möglich oder auf einen bestimmten Winkelbereich beschränkt sein. In dem vorgesehenen Winkelbereich kann insbesondere jede Drehposition ermittelt werden.

Die Drehposition des Betätigungsteils erlaubt eine sehr genaue Aussage über die auszuführende Funktion. Beispielsweise ist in einem bestimmten Winkelbereich eine Aktivstellung vorgesehen, bei der eine bestimmte Funktion aktiv oder aktivierbar ist, und in einem anderen Winkelbereich ist eine Passivstellung vorgesehen, bei der eine bestimmte Funktion nicht aktiv oder nicht aktivierbar ist. Anhand der ermittelten Drehposition ist damit unmittelbar ersichtlich, ob eine bestimmte Funktion aktiv oder aktivierbar ist. Das Basisteil kann so ausgestaltet sein, dass eine gewünschte Funktion wie etwa ein Zerkleinern einer Speise mit einem Zerkleinerungswerkzeug erst im Anschluss an die Detektion einer bestimmten Position erfolgt, die beispielsweise einen verriegelten Zustand anzeigt. Insbesondere ist das Basisteil so ausgestaltet, dass der Positionssensor oder eine mit dem Positionssensor verbundene Steuerungseinrichtung ein Signal ausgibt, wenn der Positionssensor ein Erreichen einer vordefinierten Drehposition erfasst. So kann das Erreichen einer gewünschten Drehposition überwacht werden und die Speisenzubereitung besonders rasch und sicher erfolgen.

In einer Ausgestaltung ist der Positionssensor dazu eingerichtet, eine absolute Drehposition des Betätigungsteils zu detektieren. Damit stellt der Positionssensor eine tatsächliche physische Drehposition des Betätigungsteils innerhalb des möglichen Winkelbereichs zur Verfügung. Im Gegensatz dazu ist es bei relativen Positionssensoren wie z. B. Potentiometern oder Inkrementalgebern, die eine Winkeländerung detektieren, notwendig, nach jedem Einschalten des Geräts einen Referenzwinkel in einer Lernfahrt zu ermitteln, mit der Folge, dass einerseits Fehler auftreten können und andererseits die Lernfahrt einer direkte Nutzung nach dem Einschalten entgegensteht. Derartige Lernfahrten sind in dieser Ausgestaltung nicht mehr notwendig. Eine absolute Drehposition kann unmittelbar nach dem Einschalten der Versorgungsspannung detektiert werden. Damit sind einerseits eine genauere Detektion und eine schnellere Einsatzbereitschaft verbunden. Andererseits wird die mechanische Belastung verringert, da die Anzahl der Fahrten deutlich reduziert wird. Es wird somit Verschleiß reduziert und die Langlebigkeit des Basisteils verbessert.

In einer Ausgestaltung weist der Positionssensor ein mit dem Betätigungsteil verbundenes Geberelement und/oder eine am Basisteil angeordnete Detektionseinrichtung auf. Insbesondere kann die Detektionseinrichtung die Position des Geberelements detektieren. Das Geberelement ist beispielsweise ein metallisches Element. Ein Magnet ist somit nicht notwendig. Es ist allerdings möglich, ein magnetisches Element zu verwenden, wobei permanente und/oder elektromagnetische Eigenschaften genutzt werden können. Das Geberelement kann zusätzlich zum Auslösen einer Funktion dienen. Beispielsweise können ein oder zwei Anschläge vorhanden sein, bei denen sich Sensoren befinden, welche die Nähe des Magneten detektieren können.

Das Geberelement ist mit dem Betätigungsteil verbunden und dreht sich mit diesem. Das Geberelement ist insbesondere formschlüssig und/oder stoffschlüssig mit dem Betätigungsteil verbunden. Es kann direkt oder indirekt, über ein oder mehrere dazwischen liegende Teile mit dem Betätigungsteil verbunden sein. Beispielsweise ist das Geberelement in eine Aufnahme am Betätigungsteil eingesteckt. Zusätzlich kann dieses in dieser Position insbesondere heißverstemmt sein. Das Geberelement kann austauschbar sein. Es findet insbesondere keine relative Drehung zwischen dem Geberelement und dem Betätigungsteil statt. Die Drehposition des Geberelements erlaubt somit einen präzisen und eindeutigen Rückschluss auf die Drehposition des Betätigungsteils, ohne dass Toleranzen wie etwa bei verbundenen Teilen eines Getriebes die Genauigkeit beeinträchtigen könnten. Die Detektion am Betätigungsteil befindet sich am Ende der Bewegungskette und ermöglicht die bestmögliche Aussage, ob sich das Betätigungsteil z. B. in einer bestimmten Position befindet. Die benötigte Messgröße wird somit direkt am Ort des Geschehens bestimmt.

Insbesondere ist die Detektionseinrichtung an einem nicht drehenden Teil des Basisteils angeordnet, sodass sich das Geberelement relativ zur Detektionseinrichtung dreht. Es findet demnach keine relative Drehung zwischen der Detektionseinrichtung und einem Gehäuse des Basisteils statt.

In einer Ausgestaltung weist die Detektionseinrichtung eine um die Drehachse des Betätigungsteils gebogene Form auf. Der Abstand zwischen Geberelement und Detektionseinrichtung ist damit verringert. Insbesondere ist die Detektionseinrichtung kreisbogenförmig. Dies ermöglicht einen möglichst gleichmäßigen Abstand zwischen Geberelement und Detektionseinrichtung unabhängig von der Drehposition. Auf diese Weise kann die Drehposition besonders exakt detektiert werden. Die Detektionseinrichtung kann sich grundsätzlich radial innerhalb oder außerhalb des das Geberelement aufweisenden Teils befinden.

In einer Ausführungsform hat zumindest ein Teil der Detektionseinrichtung die Form eines gebogenen Streifens. Der Streifen kann eine Dicke von weniger als 5 mm oder weniger als 3 mm aufweisen. Auf diese Weise wird eine kompakte, platzsparende Bauform ermöglicht. An dem Streifen kann eine Anschluss- und/oder Verarbeitungseinheit angeordnet sein, die von der Streifenform abweicht und beispielsweise einen Stecker aufweist. Die Anschluss- und/oder Verarbeitungseinheit kann einen integrierten Schaltkreis zur Auswertung der Sensordaten und/oder einen insbesondere nichtflüchtigen Speicher zum Programmieren der Detektionseinrichtung umfassen.

In einer Ausführungsform ist die Detektionseinrichtung so ausgebildet und angeordnet, dass sie sich über den gesamten Winkelbereich erstreckt, um den das Betätigungsteil gedreht werden kann. So kann eine 1:1-Detektion und damit eine besonders hohe Auflösung erreicht werden. Beispielsweise weist der Positionssensor bzw. die Detektionseinrichtung eine Länge auf, die sich über den gesamten Winkelbereich erstreckt, in dem sich das Betätigungsteil bewegen kann. Das Betätigungsteil kann sich um einen Winkel von 360° oder einen eingeschränkten Winkelbereich drehen. In einer Ausführungsform beträgt der Winkel mindestens 45°, insbesondere mindestens 60° und/oder höchstens 120°, insbesondere höchstens 90°. In einem Ausführungsbeispiel beträgt der tatsächlich benötigte Winkelbereich des Betätigungsteils 72° oder 76°. In einer Ausführungsform ist der Erkennungsbereich des Positionssensors etwas größer als der tatsächlich benötigte Winkelbereich, und beträgt beispielsweise 80°. Auf diese Weise können Fertigungstoleranzen ausgeglichen werden.

In einer Ausgestaltung ist die Detektionseinrichtung eine induktive Detektionseinrichtung. Es können Wirbelströme detektiert werden. Insbesondere umfasst die Detektionseinrichtung eine Sendespule und mindestens eine Empfangsspule. Eine Empfangsspule kann einen mäanderförmigen, beispielsweise sinusförmigen Leiter aufweisen. Es können zwei Empfangsspulen vorhanden sein, wobei eine erste Empfangsspule einen sinusförmigen Leiter aufweist und eine zweite Empfangsspule einen cosinusförmigen Leiter aufweist. Wicklungsrichtungen in benachbarten Segmenten einer Spule können abwechselnd im Uhrzeigersinn und gegen den Uhrzeigersinn angeordnet sein, sodass induzierte Spannungen abwechselnd entgegengesetzte Polarität aufweisen.

Jede Spule kann als Leiterplatte bzw. auf einer Leiterplatte ausgeführt sein, insbesondere einer flexiblen Leiterplatte. Bevorzugt sind die Spulen auf einer gemeinsamen Leiterplatte angeordnet. Die Spulen können nebeneinander und/oder überlagert angeordnet sein. So kann eine streifenförmige Detektionseinrichtung flexibel in eine benötigte gebogene Form gebracht werden. Die Detektionseinrichtung kann eine Auflösung von mindestens 8 bit, insbesondere mindestens 12 bit und bevorzugt mindestens 16 bit aufweisen. Ein Erkennungsbereich kann größer sein als der mögliche Winkelbereich des Betätigungsteils. Eine induktive Detektionseinrichtung ist besonders gut geeignet für raue Umgebungen und hohe Temperaturen.

In einer Ausgestaltung ist die Detektionseinrichtung kraft-, stoff- und/oder formschlüssig an einem Sensorträger befestigt. Der Sensorträger dient dem Tragen bzw. Halten der Detektionseinrichtung. Der Sensorträger ist insbesondere ein Kunststoffteil. Der Sensorträger kann eine gebogene Form aufweisen. Es können ein oder mehrere Formschlusselemente vorhanden sein, beispielsweise Pins, Anlagekanten und/oder pilzförmige Köpfe, um die Detektionseinrichtung in zumindest einer oder zwei Raumrichtungen formschlüssig am Sensorträger zu befestigen. Die Befestigung kann alternativ oder ergänzend durch Heißverstemmen erfolgen. Dies erlaubt eine präzise, formschlüssige Befestigung in allen drei Raumrichtungen. Die Befestigung kann alternativ oder ergänzend durch Kleben erfolgen. Auch bei dieser stoffschlüssigen Verbindung wird insbesondere zusätzlich ein Formschluss zumindest in einer oder zwei Raumrichtungen hergestellt. Ein Einklemmen der Detektionseinrichtung ist grundsätzlich auch möglich. Insbesondere ist die Detektionseinrichtung fest mit dem Sensorträger verbunden, also relativ zum Sensorträger unbeweglich.

Es kann am Sensorträger ein insbesondere verstärkter und/oder verbreiterter Bereich zur Anordnung der Anschluss- und/oder Verarbeitungseinheit vorhanden sein. Wenn die Detektionseinrichtung eine flexible Leiterplatte aufweist, kann der Bereich beispielsweise mit einem nicht elektrisch leitenden sowie schwer entflammbaren Material wie einem FR-4-Verbundwerkstoff verstärkt sein, um die Steifigkeit zu erhöhen und eine feste Anordnung der Anschluss- und/oder Verarbeitungseinheit zu ermöglichen. Die Ausführungen zur Befestigung der Detektionseinrichtung gelten analog für die Befestigung der Anschluss- und/oder Verarbeitungseinheit, sodass diesbezüglich auf oben verwiesen wird.

In einer Ausgestaltung ist der Sensorträger mit einem Gehäuse des Basisteils verbunden. Der Sensorträger kann direkt oder indirekt mit dem Gehäuse verbunden sein. Bei einer direkten Verbindung kontaktiert der Sensorträger das Gehäuse. Bei einer indirekten können eine oder mehrere Komponenten zwischen dem Sensorträger und dem Gehäuse angeordnet sein. Insbesondere ist der Sensorträger fest mit dem Gehäuse verbunden, also relativ zum Gehäuse unbeweglich.

Das Betätigungsteil ist um eine Drehachse drehbar. In einer Ausgestaltung ist das Betätigungsteil um eine zumindest im Wesentlichen vertikale Achse drehbar und/oder um eine Drehachse, die parallel zu einer Drehachse einer Welle zum Antreiben des Werkzeugs zur Speisenzubereitung ausgerichtet ist. Dies erlaubt besonders vorteilhaft eine parallele Ausrichtung der Drehachsen. Beispielsweise kann so eine Verriegelung des Speisenzubereitungsgefäßes von unten erfolgen. Besonders bevorzugt haben das Betätigungsteil und die Welle dieselbe Drehachse.

In einer Ausgestaltung ist das Betätigungsteil zumindest teilweise ringförmig, bevorzugt vollständig ringförmig, beispielsweise kreisringförmig ausgestaltet, typischerweise in Bezug zur Drehachse. Mit anderen Worten ist ein Raum im radial Inneren des Betätigungsteils frei. Dies ermöglicht, dort eine oder mehrere andere Komponenten des Basisteils oder der Küchenmaschine unterzubringen, beispielsweise eine Welle zum Antreiben eines Werkzeugs zur Speisenzubereitung.

In einer Ausgestaltung umfasst die Anordnung ferner eine angetriebene Welle zum Antreiben eines drehbaren Werkzeugs des Speisenzubereitungsgefäßes. Die Welle ist vorzugsweise mittig in der Anordnung angeordnet. Die Welle kann radial innerhalb des Betätigungsteils angeordnet sein. Insbesondere umfasst das Basisteil einen Elektromotor zum Antreiben der Welle. Insbesondere umfasst die Welle einen Verbindungsabschnitt mit einer nicht kreisförmigen Kontur, mit der eine korrespondierende Kontur des Speisenzubereitungsgefäßes drehfest verbunden werden kann.

Das Speisenzubereitungsgefäß kann als Funktionskomponente wie beschrieben ein drehbares Werkzeug zur Speisenzubereitung aufweisen. Das Speisenzubereitungsgefäß kann eine Verbindungswelle aufweisen, mit der die Rotation der Welle des Basisteils auf das Werkzeug übertragen werden kann. Das Werkzeug kann von der Verbindungswelle abnehmbar sein. Die Verbindungswelle kann eine nicht kreisförmige Kontur aufweisen, insbesondere an der Unterseite des Speisenzubereitungsgefäßes, die mit der Kontur an der Welle des Basisteils drehfest verbindbar ist, um die Rotation der Welle auf die Verbindungswelle zu übertragen. Die Verbindungswelle kann durch den Boden des Speisenzubereitungsgefäß verlaufen. In dieser Ausgestaltung ist die Welle ein Bereich der Anordnung, der dem Ansteuern einer Funktionskomponente des Speisenzubereitungsgefäßes dient.

In einer Ausgestaltung weist das Betätigungsteil mindestens ein Kontaktelement auf. Das Kontaktelement kann der formschlüssigen Verriegelung des Speisenzubereitungsgefäßes mit dem Basisteil dienen. Insbesondere kontaktiert das Kontaktelement ein korrespondierendes Element des Speisenzubereitungsgefäßes. Insbesondere wird auf diese Weise im verriegelten Zustand ein Anheben des Speisenzubereitungsgefäßes in axialer und/oder vertikaler Richtung formschlüssig verhindert.

In einer ergänzenden oder alternativen Ausführungsform dient das Kontaktelement der Übertragung der Drehbewegung und/oder Kraft des Betätigungsteils an eine Komponente des Speisenzubereitungsgefäßes. Das Speisenzubereitungsgefäß weist insbesondere ein korrespondierendes Element auf, welches das Kontaktelement des Betätigungsteils kontaktiert von diesem bewegt und/oder mit der Kraft beaufschlagt wird. Beispielsweise kann ein Speisenzubereitungsgefäß eine insbesondere mechanische Übertragungseinrichtung zur Übertragung einer Kraft und/oder Bewegung, insbesondere einer Drehbewegung, an ein Funktionsmodul aufweisen. Die Übertragungseinrichtung kann dann ein Element aufweisen, welches mit dem Kontaktelement des Betätigungsteils zusammenwirkt. Die Übertragungseinrichtung kann dazu eingerichtet sein, ihrerseits die Bewegung an das Funktionsmodul weiterzugeben. Dazu können auch die Übertragungseinrichtung und das Funktionsmodul korrespondierende Kontaktelemente aufweisen.

Insbesondere ragt das Kontaktelement in radialer Richtung von der benachbarten Struktur des Betätigungsteils ab, beispielsweise nach außen. Insbesondere sind mehrere, beispielsweise drei Kontaktelemente vorhanden, die über den Umfang verteilt sein können.

In einer Ausgestaltung weist das Basisteil ferner einen Aktuator zum Antreiben des Betätigungsteils auf. Der Aktuator ist insbesondere elektrisch betrieben und kann als Elektromotor ausgestaltet sein, z. B. als Stellmotor. Der Aktuator ist insbesondere unterhalb der Aufnahme und/oder des Speisenzubereitungsgefäßes angeordnet. Der Aktuator dient dazu, das Betätigungsteil zu drehen und so automatisiert die beschriebene Funktion oder Funktionen auszuführen. Insbesondere weist der Aktuator keinen Inkrementalgeber auf. Insbesondere weist das Basisteil oder die gesamte Küchenmaschine keinen Inkrementalgeber auf. So kann der technische Aufwand verringert werden.

In einer Ausführungsform umfasst das Basisteil eine Steuerungseinrichtung, die dazu eingerichtet ist, den Aktuator zu steuern. Die Steuerungseinrichtung kann abhängig von der Drehposition des Betätigungsteils eine Position und/oder Bewegung des Betätigungsteils steuern. Beispielsweise kann die detektierte Drehposition Rückmeldung darüber geben, dass eine gewünschte Funktion ausgeführt wurde, z. B., dass das Speisenzubereitungsgefäß oder ein Funktionsmodul verriegelt wurde. Als Reaktion auf eine solche Rückmeldung kann die Drehung des Betätigungsteils angehalten werden.

In einer Ausgestaltung ist das Basisteil dazu eingerichtet, eine Stromaufnahme des Aktuators auszuwerten, um eine Information über die Drehposition des Betätigungsteils zu erhalten. Neben der Information vom Positionssensor kann somit eine Information aus einer zweiten, unabhängigen Quelle genutzt werden. Dies erhöht die Ausfallsicherheit und ermöglicht Überwachungs- und Diagnosefunktionen.

Beispielsweise kann eine erhöhte Stromaufnahme (Überstromevent) auf ein schwer bewegliches oder unbewegliches Betätigungsteil hinweisen. Dies kann beispielsweise bei Erreichen eines Anschlags, bei einem gebrochenen Zahnrad, bei einer Verschmutzung, einem defekten Motor oder bei einem falsch auf- oder eingesetzten Speisenzubereitungsgefäß der Fall sein. Wird zudem die vom Positionssensor ermittelte Drehposition des Betätigungsteils und/oder eine beispielsweise erkannte Art des Speisenzubereitungsgefäßes berücksichtigt, kann der Grund für die erhöhte Stromaufnahme ermittelt werden. Dies kann zur Steuerung verwendet werden. Beispielsweise kann eine Ausgabe an einen Benutzer erfolgen, wenn ein Deckel falsch aufgesetzt ist und/oder es kann ein bestimmter Betrieb einer bestimmten Funktionskomponente zur Speisenzubereitung gesperrt werden, etwa ein Zerkleinern eines Lebensmittels durch schnelle Drehung eines Messers in einem Speisenzubereitungsgefäß. Insbesondere wird die Stromaufnahme mit der Drehposition des Betätigungsteils abgeglichen. Diskrepanzen zwischen den beiden Messungen können auf einen Fehler hinweisen. In diesem Fall, beispielsweise wenn die Messwerte der Stromaufnahme und des Positionssensors außerhalb eines bekannten Arbeitsbereiches liegen, kann das Basisteil automatisch in einen sicheren Zustand übergehen. Das kann umfassen, dass ein Motor abgeschaltet wird und/oder dass das Betätigungsteil in eine bestimmte Position bewegt wird. So kann stets die Betriebssicherheit gewährleistet werden.

Beispielsweise kann durch Auswertung der Stromaufnahme ein Endanschlag bei der Verriegelung des Speisenzubereitungsgefäßes oder eines Funktionsmoduls oder einer anderen Funktion, ein Erreichen einer vorbestimmten Position für die Ausführung einer bestimmten Funktion, ein Nichtvorhandensein oder eine Beschädigung eines Speisenzubereitungsgefäßes oder Funktionsmoduls oder eine Störung bei der Bewegung des Betätigungsteils detektiert werden. Beispielsweise können derartige Ereignisse durch ein Überstromevent detektiert werden, welches in einem bestimmten Winkelbereich auftritt. Die Verwendung sowohl des Sensors als auch der Stromaufnahme erlaubt eine Plausibilitätsprüfung des ermittelten Zustands, sodass insgesamt die Verlässlichkeit des Systems erhöht wird. Beispielsweise kann der Aktuator für einen kurze Zeitraum wie etwa zwei Sekunden bestromt werden. Falls in diesem Zeitraum kein Überstromevent auftritt, kann ein Timeout-Fehler generiert werden und/oder die Funktion des Basisteils gestoppt werden. Die Stromaufnahme des Motors kann kontinuierlich überwacht werden. Im Falle eines Überstromevents kann eine Winkelbestimmung mit dem Sensor ausgelöst werden. So kann bestätigt werden, dass die detektierte Situation tatsächlich vorliegt. Die Betriebssicherheit kann so erhöht werden.

Beispielsweise kann die Stromaufnahme des Motors oder ein Endanschlag verwendet, um in einer werksseitigen Kalibrierung oder Tarierung am Ende der Fertigung und/oder nach einer Wartung eine Nullposition zu identifizieren. In einer Ausführungsform erfolgt während der Fertigung eine Kalibrierung des Sensors. Die kann die Genauigkeit der Winkelbestimmung verbessern. Beispielsweise kann der Aktuator um einen bestimmten Winkel, etwa 10°, verfahren werden. Anschließend kann der Aktuator zurückgefahren werden, bis ein Überstromevent erfasst wird. Dies kann z. B. der Entriegelungsposition entsprechen. Es kann ein Winkelversatz zwischen der angefahrenen Nullposition oder Grundposition und der Startposition ermittelt werden und z. B. in einer Steuerungseinrichtung hinterlegt werden. Dieser Winkelversatz kann bei einer anschließenden Winkelbestimmung subtrahiert werden, um einen korrekten Winkel durch den Sensor zu bestimmen. Es kann nach der beschriebenen Kalibrierung des Sensors der Aktuator mit dem bestimmten Winkelversatz verfahren werden, um zu prüfen, ob die Grundposition zuverlässig angefahren wird. Das Basisteil kann ferner eine Verschleißdetektion für das Betätigungsteil umfassen. Diese kann dazu eingerichtet sein, zu erkennen, wenn die Nullposition außerhalb eines vordefinierten Toleranzbereichs liegt, beispielsweise bei Drehposition < -1°. Wird dies detektiert, kann z. B. eine Information an den Benutzer ausgegeben werden, etwa über eine Ausgabeeinrichtung des Basisteils.

Die Detektionseinrichtung kann eine eindeutige Identifikation aufweisen, die in der Detektionseinrichtung gespeichert werden kann. In einem Servicefall kann eine neue Tarierung erfolgen. Der Winkelversatz kann dann gespeichert werden. Falls eine neue Detektionseinrichtung eingebaut wird, kann deren Identifikation gespeichert werden, insbesondere zusammen mit dem Winkelversatz. Es kann eine automatische Sperre vorgesehen sein, wenn die Identifikation nicht korrekt ist, um aus Sicherheitsgründen den Betrieb des Basisteils zu verhindern, wenn die Tarierung nicht durchgeführt wurde.

In einer Ausgestaltung umfasst die Anordnung einen oder mehrere elektrische Kontakte zur Übertragung von Daten und/oder elektrischer Energie zwischen dem Basisteil und einem Speisenzubereitungsgefäß. Die elektrischen Kontakte dienen insbesondere der elektrisch leitfähigen Verbindung mit dem Speisenzubereitungsgefäß. Insbesondere umfasst das Speisenzubereitungsgefäß zumindest einen, typischerweise mehrere korrespondierende elektrische Kontakte. In dieser Ausgestaltung sind die elektrischen Kontakte typischerweise ein Bereich der Anordnung, der dem Ansteuern zumindest einer Funktionskomponente des Speisenzubereitungsgefäßes dient.

Elektrische Energie umfasst elektrische Spannung und elektrischen Strom. Die Übertragung kann dem Senden von Daten und/oder elektrischem Strom vom Basisteil an das Speisenzubereitungsgefäß dienen. Die Übertragung kann dem Empfangen von Daten und/oder elektrischem Strom vom Speisenzubereitungsgefäß durch das Basisteil dienen. Beispielsweise kann Strom bereitgestellt werden, um mindestens eine Heizeinrichtung oder mindestens einen Sensor des Speisenzubereitungsgefäßes oder eines Funktionsmoduls zu betreiben. Beispielsweise können Daten eines Sensors und/oder durch das Speisenzubereitungsgefäß weitergeleitete Daten eines Funktionsmoduls weitergeleitet werden.

Falls sowohl elektrischer Strom als auch Daten übertragen werden sollen, kann ein elektrischer Kontakt grundsätzlich für beide Funktionen verwendet werden, ggf. auch gleichzeitig. Es können aber auch unterschiedliche elektrische Kontakte für Strom und Daten vorhanden sein.

In einer Ausgestaltung ist das Basisteil dazu eingerichtet, die Verwendung zumindest eines elektrischen Kontakts auf Basis einer detektierten Drehposition des Betätigungsteils zu steuern. Beispielsweise kann eine Heizeinrichtung nur dann betrieben werden oder nur dann mit einer Temperatur oberhalb eines bestimmten Temperaturschwellenwerts betrieben werden, wenn das Speisenzubereitungsgefäß verriegelt ist, wenn ein bestimmtes Funktionsmodul, nämlich ein Deckel, auf dem Speisenzubereitungsgefäß vorhanden ist, oder wenn der Deckel verriegelt ist. Diese Information kann aus der Drehposition abgeleitet werden.

In einer Ausführungsform umfasst das Basisteil eine Steuerungseinrichtung. Die Steuerungseinrichtung kann dazu eingerichtet sein, einen Speisenzubereitungsprozess unter Verwendung des Speisenzubereitungsgefäßes zu steuern. Die Steuerungseinrichtung kann dazu eingerichtet sein, einen oder mehrere elektrische Kontakte, das Betätigungsteil und/oder die Welle zu steuern. Die Steuerung kann beispielsweise auf Basis eines elektronisch gespeicherten Rezepts oder einer eingegebenen Instruktion eines Benutzers erfolgen. Die Steuerung kann umfassen, ob und/oder wie ein Bereich angesteuert wird. Vorzugsweise umfasst die Steuerungseinrichtung einen Prozessor und einen Speicher mit einem Computer-Programm-Code, d. h. auf dem Speicher speicherbare Befehle. Der Prozessor, der Speicher und der Computer-Programm-Code sind so konfiguriert, dass ein Verfahren mit mehreren Verfahrensschritten durchgeführt werden kann.

Beispielsweise ist das Basisteil dazu eingerichtet, eine Position oder Bewegung des Betätigungsteils auf Basis eines elektronisch gespeicherten Rezepts oder einer eingegebenen Instruktion eines Benutzers zu steuern. Die Steuerungseinrichtung kann die Steuerung in Abhängigkeit von der Art des Speisenzubereitungsgefäßes beeinflussen. Die Steuerungseinrichtung kann dazu eingerichtet sein, ein Vorhandensein und/oder die Art des Speisenzubereitungsgefäßes zu erkennen.

In einer Ausgestaltung ist das Basisteil dazu eingerichtet, eine Funktionskomponente auf Basis eines elektronisch gespeicherten Rezepts oder einer beispielsweise eingegebenen Instruktion eines Benutzers zur Speisenzubereitung zu betreiben. Die Instruktion kann ein Betriebsmodus sein, der am Basisteil auswählbar sein kann, wie z. B. ein Teigmodus oder ein Reinigungsmodus. Ein Betriebsmodus kann einen typischen Betrieb abbilden und/oder eine oder mehrere Steuerungsanweisungen für Funktionskomponenten umfassen Insbesondere ist das Basisteil dazu eingerichtet, die Anordnung so anzusteuern bzw. zu betreiben, dass eine Funktionskomponente betrieben wird. Die Funktionskomponente kann Teil eines Speisenzubereitungsgefäßes oder eines Funktionsmoduls sein. Das Betreiben kann beispielsweise erfolgen durch Ansteuern der angetriebenen Welle zum Antreiben des drehbaren Werkzeugs, des Betätigungsteils oder eines oder mehrerer elektrischer Kontakte.

In einer Ausgestaltung ist das Basisteil dazu eingerichtet, vor oder während des Betreibens der Funktionskomponente zu prüfen, ob der Betrieb gemäß der Instruktion des Benutzers oder des Rezepts bei der detektierten Drehposition des Betätigungsteils zulässig ist. Das Basisteil kann dazu eingerichtet sein, den Betrieb der Funktionskomponente gemäß der Instruktion des Benutzers oder des Rezepts zu unterlassen, wenn der Betrieb gemäß der Instruktion des Benutzers oder des Rezepts nicht zulässig ist. Mit anderen Worten wird eine aktuelle Drehposition detektiert und es wird geprüft, ob die detektierte Drehposition den gewünschten oder vorgesehenen Betrieb der Funktionskomponente erlaubt. Wenn nicht, wird die Funktionskomponente nicht wie gewünscht betrieben.

Wenn der Betrieb nicht zulässig ist, kann der Betrieb gänzlich unterlassen werden. Wenn kein verriegelter Deckel vorhanden ist, kann beispielsweise nicht Schokolade zerkleinert werden. Alternativ kann der Betrieb in diesem Fall mit wenigstens einem veränderten Parameter ausgeführt werden. Wenn kein verriegelter Deckel vorhanden ist, kann beispielsweise eine Suppe mit verringerter Drehzahl gerührt oder mit verringerter Temperatur warmgehalten werden. Auch dabei wird der Betrieb gemäß der Instruktion des Benutzers oder des Rezepts unterlassen, es erfolgt jedoch ein abweichender Betrieb. So kann die Sicherheit erhöht werden.

Beispielsweise prüft das Basisteil vor jeder Änderung eines Parameters zum Betreiben einer Funktionskomponente, ob die detektierte Drehposition den Betrieb mit dem geänderten Parameter erlaubt. Eine derartige Prüfung kann auch während der Änderung eines Parameters erfolgen, beispielsweise in bestimmten Intervallen. Beispielsweise kann beim Erhöhen der Temperatur ab einer gewissen Temperatur eine Verriegelung des Speisenzubereitungsgefäßes erforderlich sein, um ein Herabfallen des Speisenzubereitungsgefäßes zu verhindern.

Das Basisteil kann dazu eingerichtet sein, eine Information an den Benutzer auszugeben. Dabei kann die Ursache für die Unzulässigkeit angegeben werden, so dass der Benutzer diese beseitigen kann, beispielsweise durch Aufsetzen und Verriegeln des Deckels. Das Verriegeln kann automatisch erfolgen, wenn der aufgesetzte Deckel detektiert wurde. Ist die Ursache beseitigt, kann der Positionssensor die verriegelte Position detektieren und der gewünschte Betrieb kann starten.

Ein weiterer Aspekt der Erfindung ist eine Küchenmaschine, umfassend ein erfindungsgemäßes Basisteil und ein Speisenzubereitungsgefäß, welches mit der Anordnung verbunden werden kann. Insbesondere ist ein lösbares, manuelles, mechanisches Verbinden gemeint. Alle Merkmale, Eigenschaften und Vorteile des oben beschriebene Basisteils und der damit verbindbaren Gegenstände gelten ebenso für die Küchenmaschine und umgekehrt.

In einer Ausführungsform weist das Speisenzubereitungsgefäß eine Schnittstelle zur mechanischen Kopplung mit einem Funktionsmodul auf. Die Schnittstelle befindet sich insbesondere an der Oberseite des Speisenzubereitungsgefäßes. Das Funktionsmodul ist insbesondere dazu eingerichtet, von oben auf oder in das Speisenzubereitungsgefäß gesetzt zu werden. Die Küchenmaschine kann das Funktionsmodul umfassen. Ein Funktionsmodul ist ein Teil, welches zusammen mit dem Speisenzubereitungsgefäß verwendet wird und eine bestimmte Funktion erfüllt. Ein Funktionsmodul kann ein Abdeckteil sein, welches das Speisenzubereitungsgefäß zumindest teilweise abdeckt, beispielsweise ein Deckel, der ggf. vor einem Hereingreifen und/oder einem Spritzen schützt. Ein Funktionsmodul kann dazu eingerichtet sein, einen oder mehrere bestimmte Prozesse der Speisenzubereitung auszuführen. Ein Funktionsmodul kann ein Zerkleinerungsteil zum Zerkleinern einer Speise sein. Ein Funktionsmodul kann beispielsweise eine Schneideinheit, etwa in Form einer Schneidscheibe, eine Reibscheibe oder ein Entsafter bzw. ein Entsafteraufsatz sein. Das Funktionsmodul kann einteilig oder mehrteilig sein. Ein Zerkleinerungsaufsatz kann beispielsweise einen Auffangkorb, ein Zerkleinerungswerkzeug, eine Verbindungswelle und einen Deckel umfassen. Das Speisenzubereitungsgefäß allein oder gemeinsam mit einem Funktionsmodul kann eine Popcornmaschine bilden. Ein Funktionsmodul kann ganz oder teilweise um das Speisenzubereitungsgefäß herum angeordnet sein. das Funktionsmodul kann eine Isolierung und/oder Abdeckung für das Speisenzubereitungsgefäß sein, welche verriegelbar sein kann.

Insbesondere sind die Schnittstellen der unterschiedlichen Speisenzubereitungsgefäße einander korrespondierend geformt. Insbesondere weist jedes Funktionsmodul eine korrespondierende Schnittstelle auf, um mit der Schnittstelle des jeweiligen Speisenzubereitungsgefäßes gekoppelt zu werden. Die mechanische Kopplung kann eine kraft- und/oder formschlüssige Kopplung sein. Zumindest quer zur axialen Richtung findet typischerweise eine formschlüssige Kopplung statt. Das Funktionsmodul kann dann zwar noch nach oben abgenommen werden, aber nicht seitlich verrutschen. Es kann möglich sein, das Funktionsmodul am Speisenzubereitungsgefäß zu verriegeln, z. B. mit der Übertragungseinrichtung des Speisenzubereitungsgefäßes. In einer Verriegelungsstellung kann dann eine insbesondere formschlüssige Verriegelung herstellt werden, so dass das Funktionsmodul nicht mehr vom Speisenzubereitungsgefäß abgenommen werden kann.

In einer Ausgestaltung sind das Basisteil und das Speisenzubereitungsgefäß so eingerichtet, dass das Speisenzubereitungsgefäß in einer Ausgangsposition des Betätigungsteils mechanisch mit dem Basisteil verbindbar ist. Insbesondere ist das Speisenzubereitungsgefäß auf die Anordnung aufsetzbar und von der Anordnung abnehmbar.

Insbesondere ist das Basisteil dazu eingerichtet, zu prüfen, ob das Betätigungsteil sich in einer Ausgangsposition befindet und/oder in welcher Drehposition sich das Betätigungsteil befindet. Die Ausgangsposition des Betätigungsteils kann erforderlich sein, um ein Speisenzubereitungsgefäß mit dem Basisteil zu koppeln. Das Basisteil kann so eingerichtet sein, dass die Prüfung bei einem oder jedem Start des Basisteils erfolgt. Ist das Betätigungsteil in einer abweichenden Drehposition, kann das Betätigungsteil in die Ausgangsposition gedreht werden.

In einer Ausgestaltung ist das Speisenzubereitungsgefäß in einer von der Ausgangsposition verschiedenen zweiten Drehposition des Betätigungsteils mit dem Basisteil verriegelt. Die Verriegelung erfolgt insbesondere wie beschrieben über das Kontaktelement des Betätigungsteils. Insbesondere ist das Speisenzubereitungsgefäß nun weder auf die Anordnung aufsetzbar noch von der Anordnung abnehmbar.

In einer Ausgestaltung weist das Speisenzubereitungsgefäß eine Übertragungseinrichtung zum Übertragen einer Kraft oder Bewegung des Betätigungsteils zwecks Ausführung einer Funktion bei auf das Speisenzubereitungsteil aufgesetzten Funktionsmodul auf.

Insbesondere sind das Basisteil und das Speisenzubereitungsgefäß so eingerichtet, dass sich in einer von der Ausgangsposition sowie der zweiten Drehposition verschiedenen dritten Drehposition des Betätigungsteils mindestens ein mit der Übertragungseinrichtung in Wirkverbindung stehendes Verriegelungselement des Speisenzubereitungsgefäßes in einer Verriegelungsposition befindet, um ein Funktionsmodul am Speisenzubereitungsgefäß zu verriegeln. Alternativ kann in der dritten Drehposition eine andere Funktion beim Funktionsmodul ausgeführt werden. Insbesondere werden die Ausgangsposition, die erste Drehposition und die zweite Drehposition in dieser Reihenfolge nacheinander durchlaufen. Wird das Betätigungselement von der Ausgangsposition in eine Drehrichtung gedreht, erfolgt die Verriegelung des Speisenzubereitungsgefäßes.

Wird in die Drehrichtung weitergedreht, erfolgt die Verriegelung des Funktionsmoduls oder die andere Funktion. Zuvor können eine oder mehrere weitere Funktionen erfolgen.

Die Übertragungseinrichtung kann zum Übertragen der Bewegung auf das Funktionsmodul eingerichtet sein. Die Funktion beim Funktionsmodul umfasst beispielsweise eine Bewegung einer Komponente des Funktionsmoduls. Die Bewegung der Komponente kann unterschiedliche Folgen haben, wie beschrieben. Die Übertragungseinrichtung kann beispielsweise drehbar sein, insbesondere um dieselbe Drehachse wie das Betätigungsteil.

Alternativ oder ergänzend kann die Übertragungseinrichtung an der Oberseite ein Verriegelungselement aufweisen, mit dem das Funktionsmodul am Speisenzubereitungsgefäß insbesondere formschlüssig verriegelt werden kann. So kann das Funktionsmodul nicht mehr vom Speisenzubereitungsgefäß abgenommen werden. In einer anderen Drehposition ist die Verriegelung gelöst und das Funktionsmodul kann insbesondere manuell abgenommen werden.

Die Übertragungseinrichtung kann zwischen einer Innenwand des Speisenzubereitungsgefäßes und einer Außenwand des Speisenzubereitungsgefäßes angeordnet sein. Es kann zwischen der Innenwand und der Außenwand ferner eine Wärmeisolierung vorhanden sein. Die Außenwand kann auch als Wärmeisolierung ausgeführt sein. Es kann vorgesehen sein, dass das Speisenzubereitungsgefäß nur dann mit dem Basisteil gekoppelt werden kann, wenn die Übertragungseinrichtung sich in der Ausgangsposition befindet. Es kann ein Vorspannelement, beispielsweise umfassend eine oder mehrere Federn, vorhanden sein, um die Übertragungseinrichtung in eine Ausgangsposition vorzuspannen. So kann sichergestellt werden, dass das Speisenzubereitungsgefäß stets ohne Weiteres mit dem Basisteil gekoppelt werden kann.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figur 1:: eine perspektivische Darstellung eines Basisteils,
- Figur 2:: einen Positionssensor,
- Figur 3:: eine Explosionszeichnung eines Basisteils,
- Figuren 4 bis 7:: unterschiedliche Aspekte von Positionssensoren, sowie
- Figur 8:: eine schematische Zeichnung einer Küchenmaschine.

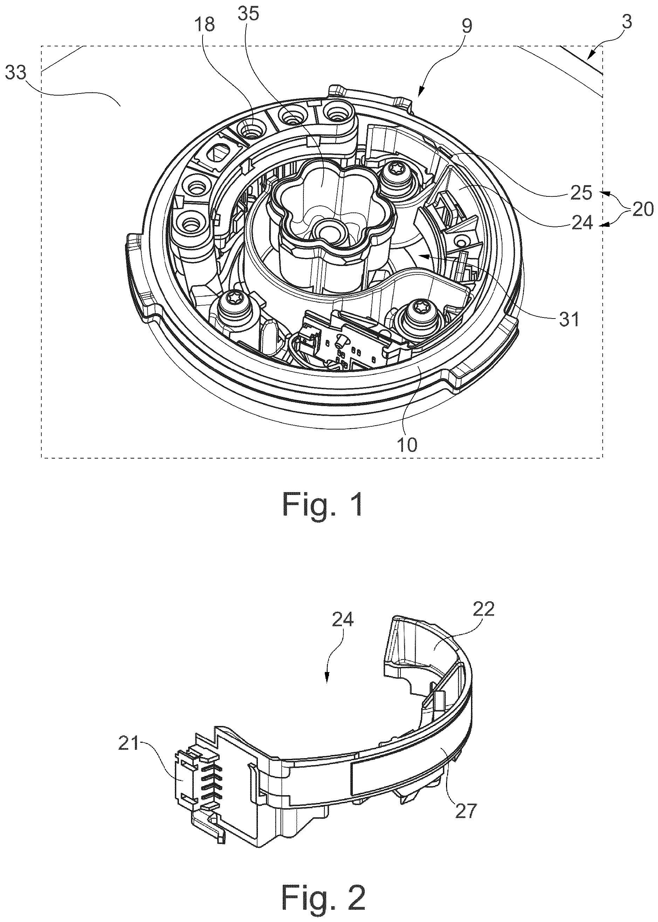

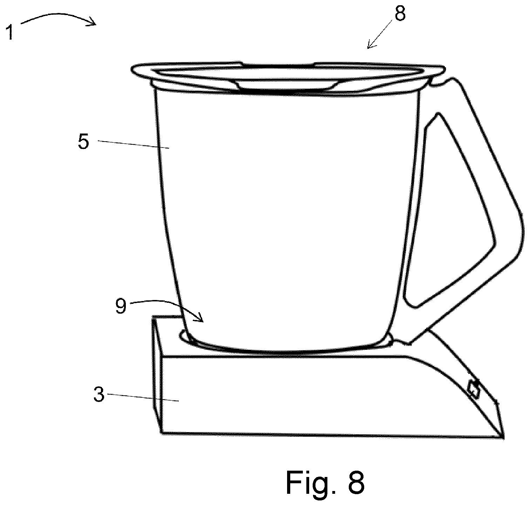

Figur 1 zeigt eine vergrößerte Darstellung eines Details eines Basisteils 3 für eine Küchenmaschine, nämlich eine Anordnung 9 zum Verbinden mit einem Speisenzubereitungsgefäß. Es ist ein Ausschnitt des Basisteils 3 zu erkennen. Der Bildausschnitt ist durch die gestrichelte Linie zu erkennen. In der oberen rechten Ecke des Bildausschnitts erkennt man eine Außenkante des Basisteils 3. Das Basisteil 3 kann auf einer Küchenarbeitsfläche aufgestellt werden und dient dazu, ein Speisenzubereitungsgefäß zu tragen und zu betreiben, wie in Figur 8 schematisch dargestellt. Das Basisteil 3 umfasst ein Gehäuse 33 und insbesondere auf der Oberseite die Anordnung 9 zum Verbinden mit einem Speisenzubereitungsgefäß. Das Bezugszeichen 33 zeigt hier auf ein oberes Gehäuseteil, welches der Anordnung 9 benachbart ist. Grundsätzlich kann das Gehäuse 33 mehrteilig aufgebaut sein und ein oberes Gehäuseteil, ein unteres Gehäuseteil und/oder ein oder mehrere innere Gehäuseteile aufweisen. Das Basisteil 3 umfasst eine zentrale, vertikal ausgerichtete, mit einem Motor 31 antreibbare Welle mit einer nicht kreisförmigen Kontur 35 zum Übertragen einer Drehung auf ein Werkzeug eines Speisenzubereitungsgefäßes. Die Kontur ist Teil der Anordnung 9.

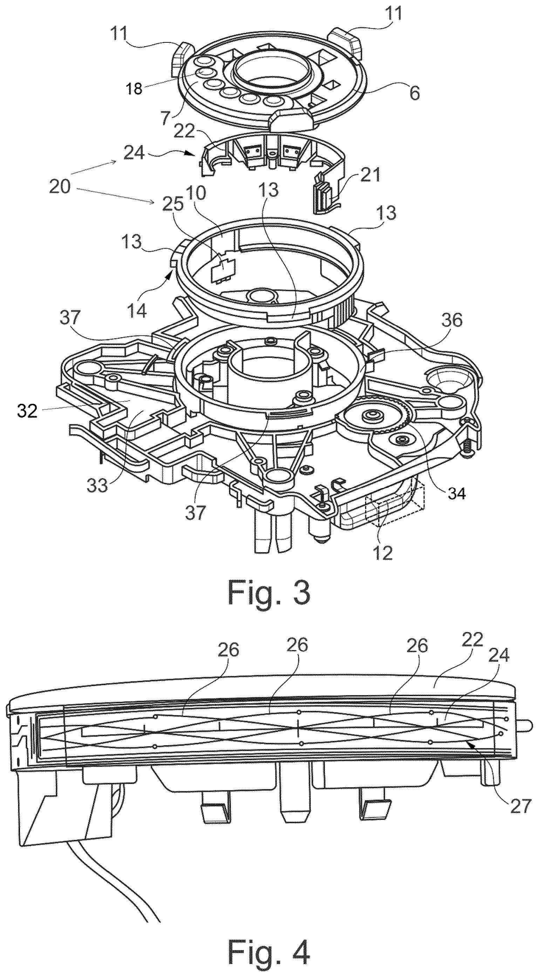

Die Anordnung 9 umfasst ferner ein um eine vertikale Achse drehbares Betätigungsteil 10 (siehe auch Figur 3). Die Achse des Betätigungsteils 10 entspricht insbesondere der Achse der Welle. Um eine Drehposition des Betätigungsteils 10 zu detektieren, umfasst das Basisteil 3 einen Positionssensor 20, genauer gesagt eine Detektionseinrichtung 24 als Teil eines Positionssensors. Die Detektionseinrichtung 24 hat eine gebogene Form und erstreckt sich um die zentrale Drehachse. Die Detektionseinrichtung 24 ist fest mit dem Gehäuse verbunden und damit unbeweglich. Die Detektionseinrichtung 24 ist dazu eingerichtet, ein am Betätigungsteil 10 angeordnetes Geberelement 25 zu lokalisieren und so die Drehposition des Betätigungsteils 10 direkt zu detektieren.

Die Anordnung umfasst ferner elektrische Kontakte 18 zur Übertragung von Daten und/oder elektrischer Energie zwischen dem Basisteil 3 und einem Speisenzubereitungsgefäß 5.

Figur 2 zeigt eine Ausgestaltung der Detektionseinrichtung 24. Diese umfasst eine flexible Leiterplatte 27, die in einer kreisbogenform um die zentrale Achse angeordnet ist und auf einem Sensorträger 22 aus Kunststoff befestigt ist. Die Leiterplatte ist streifenförmig und umfasst mehrere Spulen als Teil einer induktiven Detektionseinrichtung, die die Position eines metallischen Geberelements detektieren können, welches benachbart zu den Spulen bewegt wird. Die Detektionseinrichtung umfasst ferner einen Anschluss 21, an dem ein Kabel zur Weiterleitung von Informationen angeschlossen werden kann.

Figur 3 zeigt eine Explosionszeichnung eines Teils der Basiseinheit. Oben ist ein Abdeckring 6 dargestellt, an dem sich eine Abdeckung 7 befindet. Die Abdeckung 7 dient zum Abdecken einer Öffnung zwischen darunter liegenden elektrischen Kontakten 18. Die elektrischen Kontakte 18 sind Teil der Anordnung zum Verbinden mit einem Speisenzubereitungsgefäß und dienen der Übertragung von elektrischer Energie und/oder Informationen an das Speisenzubereitungsgefäß bzw. von dem Speisenzubereitungsgefäß. Am Abdeckring befinden sich, gleichmäßig über den Umfang verteilt, drei Einführelemente 11, die jeweils abgeschrägte Kanten aufweisen und als Einführhilfe für das Speisenzubereitungsgefäß dienen. Das Speisenzubereitungsgefäß weist an der Unterseite korrespondierende Aussparungen auf, in die die Einführelemente 11 beim Verbinden eingeführt werden.

Unter dem Abdeckring 6 befindet sich der oben beschriebene Positionssensor 20. Der Abdeckring 6 kann als Dichtung ausgeführt sein. Der Sensorträger 22 ist über das unten beschriebene Zwischenelement fest mit einem Teil des Gehäuses 33 verbunden, hier einem inneren Gehäuseteil, welches als strukturierte Platte 32 ausgeführt ist und trägt die Detektionseinrichtung 24 und den Anschluss 21. Ein metallisches Geberelement 25 des Positionssensors 20 ist fest mit dem unter der Detektionseinrichtung 24 dargestellten Betätigungsteil 10 verbunden. Bei einer Drehung des Betätigungsteils 10 wird somit das Geberelement 25 an der Detektionseinrichtung 24 entlangbewegt und kann von dieser lokalisiert werden, um die Drehposition des Betätigungsteils 10 zu detektieren.

Das Betätigungsteil 10 ist ringförmig und umfasst, gleichmäßig über den Umfang verteilt, drei Kontaktelemente 13. Über einen rein schematisch dargestellten Aktuator 12 (gestrichelt) und insbesondere ein Getriebe, hier beispielhaft als Zahnrad 34 dargestellt, kann das Betätigungsteil um die vertikale Achse gedreht werden. Beispielsweise kann der Aktuator 12 ein Elektromotor sein, der das Getriebe antreibt, welches wiederum das Betätigungsteil 10 antreibt. Im hier gezeigten Ausführungsbeispiel treibt der Aktuator 12 direkt oder indirekt das Zahnrad 34 an. Das Zahnrad 12 kann das Betätigungsteil 10 antreiben. Beispielsweise umfasst das Betätigungsteil 10 Zähne, bevorzugt an der radialen Außenseite, die mit den Zähnen des Zahnrads 34 in Eingriff stehen und durch diese gedreht werden können. Die Drehachse des Zahnrads 34 ist insbesondere parallel zur Drehachse des Betätigungsteils 10 ausgerichtet.

In der Ausgangsposition des Betätigungsteils fluchten die Kontaktelemente 13 mit den darüber befindlichen Einführelementen 11 und den unten beschriebenen, darunter befindlichen Verriegelungshaken 37. Die Kontaktelemente 13 weisen Kontaktflächen 14 auf und dienen dem Ausführen unterschiedlicher Funktionen, insbesondere beim Speisenzubereitungsgefäß. Beispielsweise kann das Speisenzubereitungsgefäß am Basisteil verriegelt werden oder es kann eine Drehbewegung oder Kraft auf eine Übertragungseinrichtung eines Speisenzubereitungsgefäßes übertragen werden.

Unterhalb des Betätigungsteils 10 ist ein Verriegelungsring 36 dargestellt, an dem die Verriegelungshaken 37 angeordnet sind. Im verriegelten Zustand des Speisenzubereitungsgefäßes kann sich ein Verbindungsring des Speisenzubereitungsgefäßes zwischen den Verriegelungshaken 37 und den Einführelementen 11 befinden und so formschlüssig mit dem Basisteil verriegelt sein. Das unten dargestellte Teil ist ein Zwischenelement, welches in einer bevorzugten Ausführungsform den Sensorträger 22 fest mit einer Unterschale des Gehäuses verbindet. Das Zwischenelement ist in Figur 1 nicht dargestellt.

Figur 4 zeigt Details einer auf einem Sensorträger 22 befestigten Detektionseinrichtung 24. Die Detektionseinrichtung 24 umfasst mehrere mäanderförmige, genauer gesagt sinus- und cosinusförmige Spulen 26 zur induktiven Detektion des Geberelements. Die Spulen 26 befinden sich auf einer flexiblen Leiterplatte 27, die wiederum mit dem Sensorträger 22 fest verbunden ist.

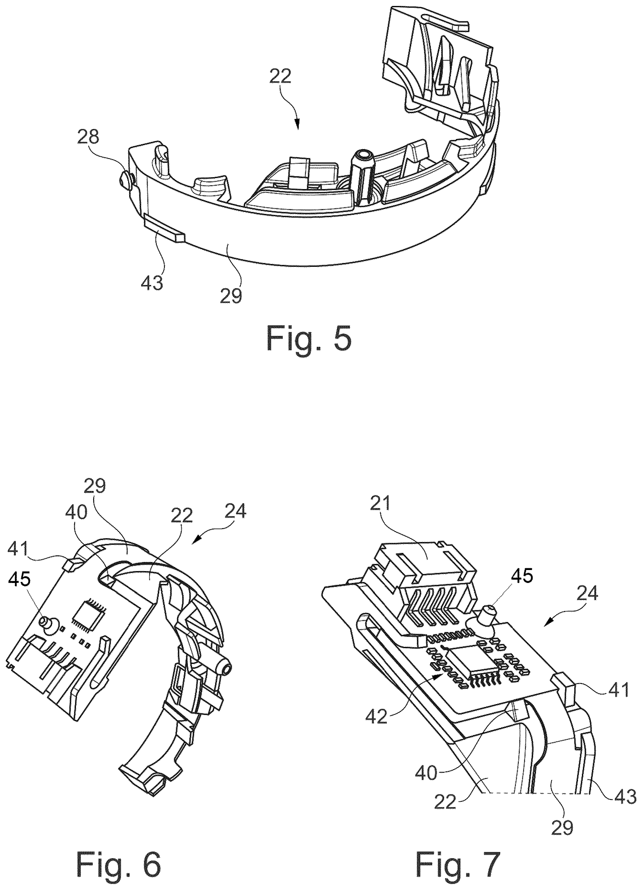

Figur 5 zeigt eine ähnliche Darstellung des Sensorträgers 22 von schräg oben, bevor die Leiterplatte mit den Spulen befestigt wird. Der Sensorträger 22 umfasst eine gebogene, glatte Außenfläche 29, auf dem die Leiterplatte befestigt wird. Ferner sind mindestens ein Formschlusselement 28 und/oder mindestens ein Anlageelement 43 vorhanden, um die Position der Leiterplatte möglichst exakt zu definieren. Hier ist als Formschlusselement 28 auf der linken Seite beispielhaft ein pilzförmiger Kopf dargestellt, über den eine entsprechende Aussparung der Leiterplatte gestülpt werden kann, um so in zumindest zwei und insbesondere drei Raumrichtungen formschlüssig gehalten zu werden. Hierbei ist ein Heißverstemmen zum Verbinden der Leiterplatte nicht nötig. Insbesondere wird zudem eine Klebeverbindung hergestellt.

Eine andere Variante der Befestigung ist in den Figuren 6 und 7 dargestellt. Es sind Kunststoff-Pins 45 zum Heißverstemmen vorhanden, die in geeignete Aussparungen der Detektionseinrichtung 24 bzw. der Leiterplatte eingeführt und anschließend unter Wirkung von Wärme und Druck umgeformt werden, um eine feste Verbindung herzustellen. Es können zur Befestigung beliebige Kombination aus Heißverstemmen und anderen Befestigungsverfahren verwendet werden. Beispielsweise kann auf einer Seite des Sensorträgers 22 ein Formschlusselement 28 wie z. B. ein pilzförmiger Kopf angeordnet sein und auf der anderen Seite ein Kunststoff-Pin 45 zum Heißverstemmen. Ein heißverstemmter Kunststoff-Pin 45 kann auch eine Pilzform aufweisen. Um die Leiteerplatte exakt auf der Außenfläche 29 zu positionieren, können zudem Anschlagkanten 40, Haken 41 und/oder Anlageelemente 43 vorhanden sein. Zudem ist hier erkennbar, dass die Detektionseinrichtung eine Anschluss- und/oder Verarbeitungseinheit umfasst, die einen Anschluss 21 und eine Auswertelektronik 42 umfasst.

Figur 8 zeigt eine Küchenmaschine 1, die ein Basisteil 3 mit einer Anordnung 9 zum mechanischen Verbinden mit einem Speisenzubereitungsgefäß 5 umfasst. In die Anordnung 9 ist ein Speisenzubereitungsgefäß 5 eingesetzt worden.

**Bezugszeichenliste**

| | |
|---|---|
| Küchenmaschine | 1 |
| Basisteil | 3 |
| Speisenzubereitungsgefäß | 5 |
| Abdeckring | 6 |
| Abdeckung | 7 |
| Funktionsmodul | 8 |
| Anordnung | 9 |
| Betätigungsteil | 10 |
| Einführelement | 11 |
| Aktuator | 12 |
| Kontaktelement | 13 |
| Kontaktfläche | 14 |
| Elektrische Kontakte | 18 |
| Positionssensor | 20 |
| Anschluss | 21 |
| Sensorträger | 22 |
| Detektionseinrichtung | 24 |
| Geberelement | 25 |
| Spule | 26 |
| Flexible Leiterplatte | 27 |
| Formschlusselement | 28 |
| Außenfläche | 29 |
| Motor | 31 |
| Strukturierte Platte | 32 |
| Gehäuse | 33 |
| Zahnrad | 34 |
| Verriegelungsring | 36 |
| Verriegelungshaken | 37 |
| Anschlagkante | 40 |
| Haken | 41 |
| Auswertelektronik | 42 |
| Anlageelement | 43 |
| Kunststoff-Pin | 45 |

## Patentansprüche

1. Basisteil (3) für eine Küchenmaschine (1), umfassend eine Anordnung (9) zum Verbinden mit einem Speisenzubereitungsgefäß (5), wobei die Anordnung (9) ein drehbares Betätigungsteil (10) zum Ausführen einer Funktion aufweist, wobei das Basisteil (3) ferner einen Positionssensor (20) umfasst, um eine Drehposition des Betätigungsteils (10) zu detektieren.

2. Basisteil (3) nach dem vorhergehenden Anspruch, wobei der Positionssensor (20) dazu eingerichtet ist, eine absolute Drehposition des Betätigungsteils (10) zu detektieren.

3. Basisteil (3) nach einem der vorhergehenden Ansprüche, wobei der Positionssensor (20) ein mit dem Betätigungsteil (10) verbundenes Geberelement (25) und eine am Basisteil (3) angeordnete Detektionseinrichtung (24) aufweist.

4. Basisteil (3) nach dem vorhergehenden Anspruch, wobei die Detektionseinrichtung (24) eine um die Drehachse des Betätigungsteils (10) gebogene Form aufweist.

5. Basisteil (3) nach einem der zwei vorhergehenden Ansprüche, wobei die Detektionseinrichtung (24) eine induktive Detektionseinrichtung (24) ist.

6. Basisteil (3) nach einem der drei vorhergehenden Ansprüche, wobei die Detektionseinrichtung (24) formschlüssig und/oder stoffschlüssig an einem Sensorträger (22) befestigt ist, wobei der Sensorträger (22) mit einem Gehäuse (33) des Basisteils (3) verbunden ist.

7. Basisteil (3) nach einem der vorhergehenden Ansprüche, wobei das Betätigungsteil (10) um eine zumindest im Wesentlichen vertikale Achse drehbar ist und/oder wobei das Betätigungsteil (10) ringförmig ist.

8. Basisteil (3) nach einem der vorhergehenden Ansprüche, wobei die Anordnung (9) ferner eine angetriebene Welle zum Antreiben eines drehbaren Werkzeugs des Speisenzubereitungsgefäßes (5) aufweist, wobei die Welle insbesondere radial innerhalb des Betätigungsteils (10) angeordnet ist.

9. Basisteil (3) nach einem der vorhergehenden Ansprüche, wobei das Betätigungsteil (10) mindestens ein Kontaktelement (13) zur formschlüssigen Verriegelung des Speisenzubereitungsgefäßes (5) mit dem Basisteil (3) und/oder zur mechanischen Übertragung einer Drehbewegung oder Kraft auf zumindest eine Komponente des Speisenzubereitungsgefäßes (5) aufweist.

10. Basisteil (3) nach einem der vorhergehenden Ansprüche, wobei das Basisteil (3) ferner einen Aktuator (12) zum Antreiben des Betätigungsteils (10) aufweist, wobei das Basisteil (3) insbesondere dazu eingerichtet ist, eine Stromaufnahme des Aktuators (12) auszuwerten, um eine Information über die Drehposition des Betätigungsteils (10) zu erhalten.

11. Basisteil (3) nach einem der vorhergehenden Ansprüche, wobei die Anordnung (9) mehrere elektrische Kontakte (18) zur Übertragung von Daten und/oder elektrischer Energie zwischen dem Basisteil (3) und einem Speisenzubereitungsgefäß (5) umfasst, wobei das Basisteil (3) dazu eingerichtet ist, die Verwendung zumindest eines elektrischen Kontakts auf Basis einer detektierten Drehposition des Betätigungsteils (10) zu steuern.

12. Basisteil (3) nach einem der vorhergehenden Ansprüche, wobei das Basisteil (3) dazu eingerichtet ist, eine Funktionskomponente auf Basis eines elektronisch gespeicherten Rezepts oder einer Instruktion eines Benutzers zur Speisenzubereitung zu betreiben, wobei das Basisteil (3) dazu eingerichtet ist, vor oder während des Betreibens der Funktionskomponente zu prüfen, ob der Betrieb gemäß der Instruktion des Benutzers oder des Rezepts bei der detektierten Drehposition des Betätigungsteils (10) zulässig ist, und den Betrieb der Funktionskomponente gemäß der Instruktion des Benutzers oder des Rezepts zu unterlassen, wenn der instruktionsgemäße Betrieb nicht zulässig ist.

13. Küchenmaschine (1), umfassend ein Basisteil (3) gemäß einem der vorhergehenden Ansprüche sowie ein Speisenzubereitungsgefäß (5), welches mit der Anordnung (9) verbunden werden kann.

14. Küchenmaschine (1) nach dem vorhergehenden Anspruch, wobei das Basisteil (3) und das Speisenzubereitungsgefäß (5) so eingerichtet sind, dass
- das Speisenzubereitungsgefäß (5) in einer Ausgangsposition des Betätigungsteils (10) mechanisch mit dem Basisteil (3) verbindbar ist, und
- das Speisenzubereitungsgefäß (5) in einer von der Ausgangsposition verschiedenen zweiten Drehposition des Betätigungsteils (10) mit dem Basisteil (3) verriegelt ist.

15. Küchenmaschine (1) nach dem vorhergehenden Anspruch, wobei das Speisenzubereitungsgefäß (5) eine Übertragungseinrichtung zum Übertragen einer Bewegung des Betätigungsteils (10) zwecks Ausführung einer Funktion bei einem auf das Speisenzubereitungsteil aufgesetzten Funktionsmodul (7) aufweist, wobei das Basisteil (3) und das Speisenzubereitungsgefäß (5) so eingerichtet sind, dass sich in einer von der Ausgangsposition sowie der zweiten Drehposition verschiedenen dritten Drehposition des Betätigungsteils (10) mindestens ein mit der Übertragungseinrichtung in Wirkverbindung stehendes Verriegelungselement des Speisenzubereitungsgefäßes (5) in einer Verriegelungsposition befindet, um ein Funktionsmodul (7) am Speisenzubereitungsgefäß (5) zu verriegeln.
